# EUROPÄISCHE PATENTSCHRIFT

(11) **EP 0 996 694 B1**
(45) Veröffentlichungstag und Bekanntmachung des Hinweises auf die Patenterteilung: **18.12.2002**
(21) Anmeldenummer: 98941334.9
(22) Anmeldetag: 15.07.1998
(51) Int. Cl.: C09J 101/26, C09J 201/00, C09J 1/00

(54) **AGGLOMERATE ZUR HERSTELLUNG EINES WÄSSRIGEN BINDEMITTELSYSTEMS**
AGGLOMERATES FOR THE PRODUCTION OF AN AQUEOUS BINDER SYSTEM,
AGGLOMERAT POUR LA FABRICATION D'UN SYSTEME DE LIANTS AQUEUX

(30) Priorität: 17.07.1997 DE 19730541; 05.02.1998 DE 19804512
(43) Veröffentlichungstag der Anmeldung: 03.05.2000
(73) Patentinhaber: Henkel Kommanditgesellschaft auf Aktien, 40589 Düsseldorf (DE)
(72) Erfinder: WITT-NÜSSLEIN, Sandra, D-40764 Langenfeld (DE); HALLER, Werner, D-40699 Erkrath (DE); SCHÖTTMER, Bernhard, D-40789 Monheim (DE); BÖCKER, Monika, D-42799 Leichlingen (DE); SEITER, Wolfgang, D-41469 Neuss (DE); HARDACKER, Ingo, D-46499 Hamminkeln (DE); HOFFMANN, Heinz-Peter, D-40789 Monheim (DE)
(86) Internationale Anmeldenummer: EP9804397
(87) Internationale Veröffentlichungsnummer: WO99003945

(56) Entgegenhaltungen:
- EP-A- 0 416 405
- EP-A- 0 597 364
- DE-A- 3 103 338
- DE-A- 19 702 026
- FR-A- 2 241 599

## Beschreibung

Die Erfindung betrifft Aggiomerate, seien es Formteile oder Aggregate, aus Stoffen zur Herstellung eines wäßrigen Bindemittelsystems, deren Herstellung und Verwendung.

Unter Agglomeraten sollen mehr oder weniger poröse, für den praktischen Gebrauch ausreichend fest zusammenhängende Ansammlungen aus pulverförmigen Stoffen verstanden werden. Wenn die Agglomerate unregelmäßig geformte Teilchen sind, also keine regelmäßige geometrische Form haben, sondern vielmehr uneben oder gar zackige Oberflächen haben werden sie als Aggregate bezeichnet. Wenn die Agglomerate eine regelmäßige Form mit ebenen oder abgerundeten Oberflächen haben, dann handelt es sich um Formkörper.
Die Agglomerate sollen aus Stoffen zur Herstellung von wäßrigen Bindemittelsystemen bestehen. Unter einem wäßrigen Bindemittelsystem sind Lösungen oder Dispersionen zu verstehen, die zum Kleben, Verfestigen oder Dichten verwendet werden. Konkrete Beispiele sind: Kleister, Dispersions-Klebstoffe, Grundierungen für mineralische Untergründe usw..
Um derartige gebrauchsfertige Bindemittel zu erhalten, müssen die trockenen Agglomerate nur noch in Wasser aufgelöst bzw. dispergiert werden.

Derartige Agglomerate sind bekannt. So wird in der DE 31 03 338 ein Kleistertrockenprodukt auf der Basis von pulverförmigen Celluloseethern vorgeschlagen. Aus Celluloseethern mit einer Teilchengrößenverteilung von 90 % unter 200 µm wird in einer Granuliereinrichtung unter Wasserzusatz ein schnell lösliches Granulat mit Korngrößen von 100 bis 600 µm hergestellt. Wegen des Wasserzusatzes beim Granulieren haben die Granulate ein höheres Volumen als vorher. Auch nach der Trocknung haben die Granualte ein Schüttgewicht von nur ca. 50 % des ursprünglichen Pulvergemisches. Das hat einen höheren Verbrauch an Verpackungsmaterial zur Folge, was unerwünscht ist. Die Granulate können in einer Preßvorrichtung, z.B. zu Tabletten mit einem Durchmesser von 25 mm geformt werden. Diese Tabletten sollen nach Einwerfen in Wasser augenblicklich zerfallen und nach einem einmaligen Aufrühren für 5 sec nach 8 min einen gebrauchsfertigen Kleister ergeben. Die Tabletten enthalten Celluloseether, Glyoxal, Phosphorsäure und ethoxylierte Fettalkohole. Sie können auch noch ein Kunststoffdispersionspulver enthalten. Nachteilig bei einer derartig zusammengesetzten Tablette ist, daß die gebrauchsfertigen Kleister nicht frei von Klumpen sind, die außen gelartig und innen noch völlig trocken sind. Diese Klumpen lösen sich auch bei kräftigem Rühren und bei langen Wartezeiten nur sehr langsam auf.

Dieses Problem der Klumpenbildung wurde in der DE 42 00 188 und in der EP 0 416 405 A beschrieben und dadurch gelöst, daß neben dem wasserlöslichen trockenen Polymer noch ein Produkt in der Tablette enthalten ist, das bei Anwesenheit von Wasser unter Freisetzung eines Gases reagiert. Dabei handelt es sich vorzugsweise um eine trockene Säurekomponente und ein Carbonat oder Bicarbonat. Außerdem wird noch der Zusatz weiterer Mittel zum Abbau der Tablette empfohlen, z.B. der Zuatz von Stärke, Superabsorber, Kieselsäure und Talk. Als Superabsorber wird ein Celluloseether beschrieben, der so vernetzt ist, daß er wasserunlöslich ist und das ca. 50fache seines Gewichtes an deionisiertem Wasser zu absorbieren vermag.
Nachteilig ist, daß sämtliche eingesetzte Stoffe nur einen sehr geringen Wassergehalt aufweisen dürfen, da es sonst zur vorzeitigen Gasbildung während der Lagerung der Klebstofftablette kommt. Um die notwendige Sprengwirkung für die Tablette zu erhalten, sind etwa 30 bis 50 % der Tablette Salze. Dieser hohe Elektrolytgehalt führt zu einer bis zu 30 % niedrigeren Viskosität im Vergleich zu Nichtelektrolyt-haltigen Klebstoffzusammensetzungen. Dies reduziert die Ergiebigkeit des Kleisters in erheblichem Maße.

Derartige Tabletten - mit oder ohne Superabsorber - haben zumindest einen der folgenden Nachteile:
- Herstellung nur unter scharfen Trockenbedingungen,
- zu geringe Festigkeit der Tabletten,
- nicht lagerbeständig wegen des Zutritts von Feuchtigkeit und
- kleine Klumpen, die erst nach 30 min verschwinden.

In der DE 197 02 026 werden diese Nachteile dadurch vermieden, daß man die Formteile unter schonenden Bedingungen herstellt, so daß auch die Ränder des Formteiles porös sind. Dazu werden die pulverförmigen Stoffe zur Herstellung des Kleisters mit 5 bis 40 Gew.-% Wasser zu Rohlingen geformt, die durch schonendes Erwärmen, insbesondere mit Mikrowellen verfestigt werden. Nachteilig bei dieser Lösung ist die aufwendige Verwendung von Mikrowellen.

Ausgehend von diesem Stand der Technik bestand die erfindungsgemäße Aufgabe darin, die geschilderten Nachteile zu vermeiden, insbesondere ein Agglomerat aus Stoffen zur Herstellung eines wäßrigen Bindemittelsystems bereitzustellen, das sich auch nach monatelanger Lagerung spätestens innerhalb der üblichen Zeit von ca. 15 min unter möglichst geringem Rühren klumpenfrei in Wasser auflöst und praktisch die gleiche Viskosität ergibt wie das entsprechende Pulver ohne Sprengmittel.

Die erfindungsgemäße Lösung ist den Patentansprüchen zu entnehmen. Sie besteht im wesentlichen darin, daß das Agglomerat aus Stoffen zur Herstellung eines wäßrigen Bindemittelsystems mindestens ein hydrophiles Sprengmittel mit einer faserigen inneren und äußeren Struktur enthält, das in Wasser unlöslich ist und einen Quelldruck erzeugt.
Die erfindungsgemäßen Agglomerate enthalten bevorzugt 99,5 bis 50, insbesondere 97 bis 70 und vor allem 95 bis 85 Gew.-% an Stoffen zur Herstellung eines wäßrigen Bindemittel-Systems und 0,5 bis 50, vorzugsweise 3 bis 30 und vor allem 5 bis 15 Gew.-% an Sprengmittel, bezogen auf die Summe von Sprengmittel und Stoffen zur Herstellung eines wäßrigen Bindemittel-Systems.

Unter einem Sprengmittel sind Stoffe oder Stoffgemische zu verstehen, die für den raschen Zerfall des Agglomerats, insbesondere der Tablette in wäßrigem Medium sorgen und so zu einer raschen und vollständigen Wirkung der Wirksubstanzen beitragen. Die Verwendung von Sprengmitteln aus wasserlöslichen oder wasserunlöslichen Substanzen, die bei Kontakt mit Wasser quellen und dabei einen Quelldruck erzeugen sowie ihr Volumen vergrößern, sind im Prinzip bekannt. Insbesondere in der pharmazeutischen Technologie werden derartige Sprengmittel als Zerfallsbeschleuniger für tablettenförmige Arzneimittel eingesetzt. Die Zerfallsmechanismen von Tabletten, die ein wasserunlösliches, bei Wasserzugabe einen Quelldruck erzeugendes Tablettensprengmittel enthalten, werden z.B. von A.M. Guyot-Hermann in der Arbeit "Tablet Disintegration and Disintegrating Agents", S.T.P. Pharma Sciences 2(6), Seiten 445 bis 462, 1992 beschrieben.

Für die erfindungsgemäßen Sprengmittel sind hydrophile Feststoffe geeignet. Hydrophil heißt: Es wird von Wasser schnell und vollständig benetzt. Zweckmäßigerweise kann die Benetzbarkeit des Sprengmittels durch Zusatz, insbesondere durch Oberflächenbehandlung mit Tensiden verbessert werden, und zwar in Mengen von 0,1 bis 10, vorzugsweise von 0,5 bis 3 g Tensid pro 100 g Sprengmittel. Bevorzugt gegenüber anionischen oder kationischen Tensiden sind nichtionische Tenside.

Das Sprengmittel muß einen starken Quelldruck erzeugen. So soll der maximale Quelldruck des Sprengmittels über dem maximalen Quelldruck jeder einzelnen Klebstoff-Komponente liegen und mindestens 10⁵ Nm⁻² (1 bar), vorzugsweise mindestens 1,4·10⁵ Nm⁻² (1,4 bar) bei einer 20 %igen Konzentration betragen, gemessen nach der in den Beispielen angegebenen Meßmethode. Wichtig ist vor allem, daß der Quelldruck des Sprengmittels innerhalb einer Minute nach der Wasser-Zugabe größer als der Quelldruck der Klebstoffkomponenten ist. Er sollte vorzugsweise um den Faktor 1,3 größer sein.
Vorteilhafterweise sollte nicht nur der Quelldruck, sondern auch das Quellvolumen (= aufgesaugte Wassermenge) groß sein, da dann die Volumenvergrößerung ebenfalls groß ist. Vorteilhafterweise sollten die Sprengmittel mindestens das 2-fache, insbesondere das 5-fache ihres Gewichtes an Wasser aufsaugen. In vielen Fällen reicht eine ca. 10-fache Wasseraufnahme.

Das Sprengmittel ist in Wasser unlöslich, d.h. die Löslichkeit liegt unter 1 g, vorzugsweise unter 0,01 g, bezogen auf 100 ml Wasser von 20 °C, gemessen nach 1 Minute ab Wasserzugabe unter Rühren, vorzugsweise auch nach längerer Zeit bis zur Sättigung. Die Löslichkeit wird üblicherweise gravimetrisch als Rückstand der Lösung bestimmt, nachdem der ungelöste Anteil z.B. durch Filtern oder Zentrifugieren separiert wurde. Falls das Sprengmittel ein Polymer ist, läßt sich die Unlöslichkeit auch durch die Viskosität bestimmen. Sie darf innerhalb einer Minute, vorzugsweise bei Sättigung um maximal 10 % zunehmen, vorzugsweise aber überhaupt nicht. Ein Beispiel für polymere Sprengmittel sind retardierte Cellulose-Derivate. Dabei handelt es sich um reversibel vernetzte Cellulose-Derivate, die im vernetzten Zustand unlöslich sind, im unvernetzten aber löslich. Die Vernetzung wird durch Wasser mit einem pH-Wert von mindestens 8 aufgehoben.

Zweckmäßigerweise vergelt das Sprengmittel nicht bei dem in der Beschreibung angegebenen Test.

Für eine schnelle Wirkung ist eine faserige innere und/oder äußere Struktur des Sprengmittels vorteilhaft. Unter "faserig" soll eine Form verstanden werden, bei der eine Dimension mindestens doppelt so groß ist wie die beiden etwa gleichgroßen anderen Dimensionen. In der Regel liegen Fasern mit einer Länge von 0,03 bis 1,5, vorzugsweise von 0,1 bis 1,0 mm vor. Die Fasern bestehen vorzugsweise aus Cellulose und ihren Derivaten. Es kommen jedoch auch andere leicht benetzbare Materialien in Frage, z.B. Glas. Aber auch nicht-faserige Formen sind brauchbar.

Bei dem Sprengmittel handelt es sich vor allem um ein natürliches oder teilsynthetisches Polysaccharid und dessen Derivate, insbesondere auf der Basis von Cellulose. Aber auch Stärke eignet sich als Basis. Es können jedoch auch vollsynthetische Sprengmittel auf der Basis von vernetzten Polyvinylpyrrolidonen (PVP) eingesetzt werden. Besonders bevorzugt sind Faserkurzschnitt oder mikrokristalline Polymere. In Frage kommen Kollagene, Amylosen, Polyamide und vor allem Cellulose, z.B. in Form von Weichholzmehl.

Prinzipiell kann unter einer Vielzahl von bekannten Sprengmitteln ausgewählt werden. Beispiele für die Cellulosen und modifizierten Cellulosen sind Avicell PH 101, 102 oder 200 der Firma FMC, Arbocel Bww 40, Firma Rettenmaier, Elcema, Firma Degussa, Lattice NT 200, Hersteller unbekannt. Beispiele für Stärkeprodukte sind die hochvernetzte Hydroxypropylstärke Prejel VA 70-S-AGGL, Firma Scholten sowie die Natrium-Carboxymethylstärken CMS UAP 500 und Primojel. Weiterhin geeignet sind die quervernetzte NatriumCarboxymethylcellulose Ac-Di-Sol der Firma FMC sowie die vemetzten Polyvinylpyrrolidon-Derivate Kollidon CL der BASF und Polyplasdone XL der GAF.

Vorzugsweise wird das Sprengmittel kompaktiert. Darunter wird ein Zusammenpreßen (Verdichten) von Ausgangsprodukten zu größeren Einheiten verstanden, und zwar mit oder ohne Bindemittel. Die Sprengmittel-Ausgangsprodukte sollten vorzugsweise in einer Mischung unterschiedlicher Dimensionen vorliegen. Bewährt haben sich Mischungen von Cellulose und ihren Derivaten mit einer Faserlänge von ca. 30 bis 150 um einerseits und von z.B. 500 bis 1 500 µm andererseits. Die Tenside und andere Zusatzstoffe wie z.B. Polyole wie Sorbit und wasserlösliche Polymere wie Polyvinylalkohol und Polyvinylpyrrolidon werden zweckmäßigerweise vor dem Kompaktieren zugesetzt. Das Sprengmittel-Kompaktat hat ein Schüttgewicht von 200 bis 700, insbesondere von 350 bis 450 g/l und eine Korngröße von vorzugsweise 0,1 bis 3, insbesondere von 0,2 bis 2 mm.

Bei den Stoffen zur Herstellung eines wäßrigen Bindemittelsystems handelt es sich bevorzugt um 50 bis 99 Gew.-% an wasserlöslichen bzw. wasserdispergierbaren, im trockenen Zustand bei Raumtemperatur nicht klebrigen anorganischen oder organischen natürlichen oder teilsynthetischen Polymeren (Basis-Polymere) sowie um 0 bis 50 Gew.-% eines vollsynthetischen Polymeren (Klebkraftverstärker), jeweils bezogen auf die Summe von Sprengmittel und Stoffen zur Herstellung eines wäßrigen Bindemittelsystems.

Als Basis-Polymer kommt neben Wasserglas zumindest einer der folgenden wasserlöslichen bzw. wasserdispergierbaren natürlichen oder teilsynthetischen Polymere in Frage, insbesondere wenn ein Kleister hergestellt werden soll:
a) Stärke und/oder Stärkederivate und
b) Cellulosederivate, insbesondere Celluloseether.

Die Stärke sollte wasserlöslich evtl. wasserquellbar sein. Insbesondere modifizierte Stärke ist von Interesse, wobei die Modifikation durch physikalische oder geringe chemische Einwirkung zustande kommt. Konkrete Beispiele sind: partiell abgebaute Stärke und Quellstärke.

Auch die Stärkederivate sollten wasserlöslich evtl. wasserquellbar sein. Insbesondere Stärkeester oder Stärkeether sind von Interesse, vor allem carboxylierte und alkoxylierte Stärken. Als carboxylierte und/oder alkoxylierte Stärken eignen sich sämtliche entsprechend modifizierte natürliche Stärketypen aus Kartoffeln, Mais, Weizen, Reis, Milo, Tapioka und dergleichen, wobei Derivate auf Basis von Kartoffeln und/oder Maisstärke bevorzugt sind. Die brauchbaren Stärkederivate weisen einen Carboxylierungsgrad von 0,1 bis 2,0 (DS) oder einen Alkoxilierungsgrad von 0,05 bis 1,5 (MS) auf. Die Stärkederivate können auch vernetzt sein. Als Vernetzungsmittel eignen sich difunktionelle Verbindungen. Derartige Vernetzungsmittel sind bekannt (siehe z.B. EP 0 311 873 B1, Seite 3, ab Zeile 49 bis Seite 4, Zeile 5.).

Als Celluloseether eignen sich insbesondere folgende Typen: Carboxymethylcellulose (CMC), Carboxymethylmethylcellulose (CMMC), Ethylcellulose (EC), Hydroxybutylcellulose (HBC), Hydroxybutylmethylcelloluse (HBMC), Hydroxyethylcellulose (HEC), Hydroxyethylcarboxymethylcellulose (HECMC), Hydroxyethylethylceltulose (HEEC), Hydroxypropylcellulose (HPC), Hydroxypropylcarboxymethylcellulose (HPCMC), Hydroxypropylmethylcellulose (HPMC), Hydroxyethylmethylcelluose (HEMC), Methylhydroxyethylcellulose (MHEC), Methylhydroxyethylpropylcellulose (MHEPC), Methylcellulose (MC) und Propylcellulose (PC), wobei Carboxymethylcellulose, Methylcellulose, Methylhydroxyethylcellulose und Methylhydroxypropylcellulose sowie die Alkalisalze der CMC und die leicht ethoxylierte MC bevorzugt sind.

Die Cellulosederivate können leicht vernetzt sein, damit sie bei einem pH von über 8 löslich sind und die Lösung in Wasser verzögert wird. Die Vernetzung kann durch Glyoxal-Additionen erfolgen. Um einen pH-Wert von mindestens 8 in der Lösung nach dem Lösen zu gewährleisten, sollte ein Überschuß der basischen Komponente gegenüber der Säurekomponente vorliegen. Vorzugsweise liegt der pH-Wert in einem Bereich zwischen 8 und 9,5.
Es kann zweckmäßig sein, mehrere Basispolymere gemeinsam einzusetzen.

Als Klebkraftverstärker können zumindest anteilig auch die wasserlöslichen bzw. wasserdispergierbaren vollsynthetischen Polymeren Polyvinylpyrrolidon, Polyacrylamid, Polyvinylalkohol oder Polyacrylsäuresalze eingesetzt werden. Bevorzugt sind Polyacrylate mit 1 bis 8 C-Atomen in der Alkohol-Komponente, sowie Vinylpolymere, insbesondere Polyvinylacetat.

Weiterhin können als Klebekraftverstärker redispergierbare Dispersionspulver von vollsynthetischen Polymeren eingesetzt werden, hierbei handelt es sich beispielsweise um die folgenden Homo- und Copolymersate. Vinylester-, Styrol-, Acrylat- und Vinylchlorid-Polymerisat: Als Basispolymerisat geeignete Vinylester-Polymerisate sind zu nennen: Vinylacetat-Homopolymere; Copolymere des Vinylacetats mit Ethylen und/oder Vinylchlorid und/oder weiteren Vinylestern, wie Vinyllaurat, Versaticsäurevinylestern, Vinylpivalat und/oder Estern von Maleinsäure/Fumarsäure; oder Homopolymerisate von Vinylestern von gesättigten C₃- bis C₈-Alkylcarbonsäuren oder deren Copolymerisate mit Ethylen, Vinylchlorid und/oder weiteren Vinylestern. Die (Meth)Acrylat- und/oder Styrol-(Co)-Polymerisate leiten sich ab von Polymerisaten aus Styrol und/oder Estern der Acrylsäure und/oder Methacrylsäure (hier als (Meth)Acrylat bezeichnet) mit geradkettigen, verzweigten oder cyclischen aliphatischen Alkoholen mit 1 bis 20 C-Atomen. Weitere Styrol-(Co)-Polymerisate können Styrol-Butadien-Copolymerisate sein. Als Vinylchlorid-Polymerisate sind Vinylchlorid-Ethylen-Copolymere geeignet.

Vorzugsweise eingesetzt werden Vinylacetat-Homopolymere, Vinylacetat-Ethylen-Copolymere oder Copolymere von Vinylestern von gesättigten C₃- bis C₈-Alkylcarbonsäuren und Ethylen mit einem Ethylengehalt von 1 bis 40 Gew.-% Ethylen und 0 bis 40 Gew.-% weiterer Vinylester aus der Gruppe der Vinylester von gesättigten C₃- bis C₈-Alkylcarbonsäuren und/oder Vinylchlorid; Styrol-Acrylate wie Styrol-Butylacrylat oder Styrol-Ethylhexyacrylat mit einem Styrolgehalt von 1 bis 70 Gew.-%. Dieser redispergierenden Polymerisate werden üblicherweise durch Sprühtrocknung von Polymerdispersionen in Sprühtürmen hergestellt. Es kann zweckmäßig sein, mehrere Klebkraftverstärker gemeinsam einzusetzen.

Die Basis-Polymere können allein oder in Kombination mit den Klebkraftverstärkern eingesetzt werden. Als alleiniges Bindemittel eignen sich insbesondere Celluloseether und die genannten Stärkederivate. Für eine Kombination aus zwei Bindemitteln eignen sich die Cellulosederivate und die Stärkederivate, denen die redispergierbaren Polymeren als Klebekraftverstärker zugesetzt werden können.

Als Basispolymer von Klebstoffen für textile und keramische Beläge sowie von Grundierungen dienen die vollsynthetischen Polymere, und zwar bis zu einem Anteil von 70 Gew.-%. Somit setzen sich die Stoffe zur Herstellung eines wäßrigen Bindemittelsystems vorzugsweise folgendermaßen zusammen:
30 bis 100 Gew.-% wasserlösliche bzw. wasserdispergierbare, im trockenen Zustand bei Raumtemperatur (20 °C) nicht klebrige anorganische oder organische, natürliche oder halbsynthetische Polymere sowie 0 bis 70 Gew.-% vollsynthetische Polymere, jeweils bezogen auf die Gesamtmenge an Stoffen (Polymeren) zur Herstellung eines wäßrigen Bindemittelsystems.

Außer diesen beiden wesentlichen Komponenten (Sprengmittel und Stoffe zur Herstellung eines wäßrigen Bindemittelsystems) können die Agglomerate noch Hilfsmittel enthalten, um den Bindemitteln bestimmte Eigenschaften entsprechend dem Verwendungszweck zu geben, z.B. Konservierungsmittel, Netzmittel, Trennmittel, Pigmente, Stabilisatoren usw.. Ein mengenmäßig wichtiger Hilfsstoff sind die Füllstoffe. Dabei handelt es sich um Stoffe, die hauptsächlich zugesetzt werden, um das Volumen bzw. das Gewicht zu erhöhen. Daneben können sie auch die technische Verwendbarkeit verbessern, z.B. die Klebrigkeit herabsetzen, wenn es darauf in dem konkreten Fall ankommt. Übliche Füllstoffe sind Carbonate (z.B. Calciumcarbonat), Silikate (z.B. Talk, Ton, Glimmer), Kieselerde, Sulfate (Calcium- und Barium-), Aluminiumhydroxid, sowie Glasfasern und -Kugeln. Derartige Füllstoffe können in einer Menge bis zu 30, vorzugsweise von 1 bis 10 Gew.-% im Agglomerat enthalten sein, bezogen auf die Summe der Stoffe zur Herstellung eines wäßrigen Bindemittelsystems und des Sprengmittels. Die Füllstoffe können jedoch auch mit dem Agglomerat gemischt sein.

In dem Agglomerat sollen jedoch weniger als 10 Gew.-%, vorzugsweise weniger als 1 Gew.-% an Salzen sein, die unter Lager- oder Anwendungsbedingungen Gase bilden. Falls man ein schaumiges Bindemittelsystem haben möchte, dann sollte dieses gasbildende System nicht in den Agglomeraten enthalten sein, sondern in einer Mischung mit diesen.

Die oben genannten Stoffe zur Herstellung eines wäßrigen Bindemittelsystems sind in der Regel fest und sollten als Pulver oder Agglomerate zu größeren Agglomeraten verarbeitet werden. Die Korngröße der Ausgangsmaterialien sollte mindestens 0,01 mm betragen und zweckmäßigerweise im Bereich von 0,2 bis 3 mm, insbesondere im Bereich von 0,5 bis 1,5 mm liegen.

Die erhaltenen Aggregate sind grobkörnig und sollten nach dem Sieben vorzugsweise folgende Teilchengrößenverteilung aufweisen:
- < 0,4 mm max. 3 Gew.-%,
- > 0,4 mm und < 1,0 mm max. 27 Gew.-%,
- > 1,0 mm und < 1,6 mm max. 35 Gew.-% und
- > 1,6 mm und < 3,0 mm max. 35 Gew.-%
Aber auch Aggregate außerhalb dieser Teilchengrößenverteilung sind möglich, z.B. Schuppen mit einer Fläche von bis zu 1 cm² und einer Höhe bis zu 3 mm.

Die erhaltenen Formteile können nahezu jegliche geometrische Form besitzen. So sind die Kugel-, die Zylinder- und die Quaderform oder eine andere dreidimensionale geometrische Form brauchbar, z.B. Tabletten, Stangen, Tafeln und Kugeln. Bevorzugt werden Formteile mit einer geometrischen Form, die in ihrem Innern mindestens einen hypothetischen Kubus mit einer Kantenlänge von 2,5 mm beinhalten kann. Die geometrische Form der Formteile richtet sich nach dem Einsatzgebiet. Sie sollte die Handhabung bei der Lagerung und Anwendung erleichtern. So sollte das Gewicht der Formteile die Herstellung üblicher Portionen an wäßrigen Klebstoffen erlauben, ohne daß man abwiegen muß. Die Formteile haben ein Gewicht von 0,5 bis 500, insbesondere von 1 bis 100 g. Wenn das Formteil Kerben wie z.B. eine Schokoladentafel enthält, sollten die Bruchteile ein Gewicht von mindestens 1 Gramm haben.

Die erfindungsgemäßen Agglomerate können nach den bekannten Verfahren zum Stückigmachen hergestellt werden (siehe zum Beispiel Ullmann's Encyclopedia of Industrial Chemistry, 5. Auflage, Band B2, Seiten 7-1 bis 7-37). Dabei handelt es sich generell um die Herstellung von grobkörnigen Agglomeraten durch Einwirkung von Druck, Temperatur und/oder Lösungsmitteln auf feinkörnige Materialien, also auf pulverförmige oder agglomerierte Mischungen.
Beim Stückigmachen durch Pressen (Brikettieren) wird die feinkömige Mischung mit oder ohne Zusatz eines Bindemittels mechanisch zusammengepreßt (kompaktiert). Zweckmäßigerweise werden für die erfindungsgemäßen Agglomerate Brikettierungs-Bindemittel verwendet, die wegen ihrer plastifizierenden Wirkung den anzuwendenden Druck verringern. Die Art und Menge des Brikettierungs-Bindemittels hängt vor allem von der Körnung des Pulvers ab. Geeignete Mittel sind zum Beispiel feste Polyethylenglykole in einer Menge bis zu 10 Gew.-%, vorzugsweise 5 Gew.-%, bezogen auf die zu verpressende Mischung. Von den zu verwendenden Preßsystemen ist vor allem die Walzenpresse neben der Stempelpresse mit geschlossener oder offener Form sowie die Ringwalzenpresse von Bedeutung. Vorzugsweise werden die Agglomerate durch wasserfreie Walzenkompaktierung der pulverförmigen Originalware hergestellt.
Neben dem Stückigmachen durch Druck ist auch das Stückigmachen durch Benetzen mit Flüssigkeit von großer Bedeutung (Granulieren). Zweckmäßigerweise wird zum Granulieren Wasser verwendet. Vorzugsweise wird das benetzte Pulver auch noch erwärmt. Derartige Verfahren zur Herstellung von Klebstoff-Granulaten unter Einwirkung von Wasser und Wärme - also ohne Zusatz der erfindungsgemäßen Sprengmitteln - sind bekannt. So wird in der EP 311 873 die Trocknung einer Klebstoff-Mischung mit 30 bis 80 % Wasser in einer dünnen Schicht auf Bändern bei 80 bis 200 °C beschrieben. In der DE 39 12 983 wird die Sprühtrocknung eines wäßrigen Stoffgemisches aus den Klebstoff-Bestandteilen beschrieben. In der DE 197 02 026 wird ein Sintern der pulverförmigen Bestandteile des Klebstoffes in Gegenwart von 5 bis 40 Gew. -% Wasser beschrieben.

Die erfindungsgemäßen Agglomerate ergeben mit Wasser rasch eine klumpenfreie wäßrige Lösung bzw. Dispersion. Dabei handelt es sich vorzugsweise um einen Kleister, also einen Klebstoff in Form eines wässrigen Quellungsproduktes, das schon bei relativ niedriger Feststoffkonzentration eine hochviskose, nicht fadenziehende Masse bildet. Diese Kleister eignen sich vorzugsweise zum Verkleben von Tapeten und anderen Wandbelägen. Aber auch andere wäßrige Klebstoffe können so hergestellt werden. Die Formteile eignen sich - bei entsprechender Zusammensetzung - auch zur Herstellung von klumpenfreien Grundierungen für mineralische Untergründe wie Putz, Estrich oder Beton an Wänden, Decken und Böden. Die so verfestigte Oberfläche wird in der Regel anschließend beschichtet, z.B. mit Farbe, mit einer Spachtelmasse oder mit einem Klebstoff. Auch die wäßrigen Klebstoffe für insbesondere textile oder keramische Beläge von Böden, Wänden und Decken lassen sich leicht klumpenfrei mit den erfindungsgemäßen Agglomeraten herstellen.

Zur Herstellung des Kleisters geht man zweckmäßigerweise folgendermaßen vor:
a) Die Agglomerate werden unter Rühren zu dem vorgelegten Wasser gegeben.
b) Gegebenenfalls wird weiter gerührt, bis sich die Formteile aufgelöst haben.

So wird ein klumpenfreier Kleister erhalten. D. h., der Kleister enthält keine trockenen Bestandteile des Agglomerates.

Gegenüber einem Kleister, der direkt aus den pulverförmigen Stoffen hergestellt wurde, zeigt der erfindungsgemäß hergestellte Kleister praktisch keine Veränderung in gebrauchswichtigen Eigenschaften wie: Viskosität, Naßklebkraft und Trockenklebkraft.

Die weiteren Vorteile der Erfindung sind: Kein Stauben beim Ansetzen des Kleisters und keine Entmischung der Kleisterbestandteile im Paket.

Die Erfindung wird nun im einzelnen erläutert:

### I. Meßmethoden

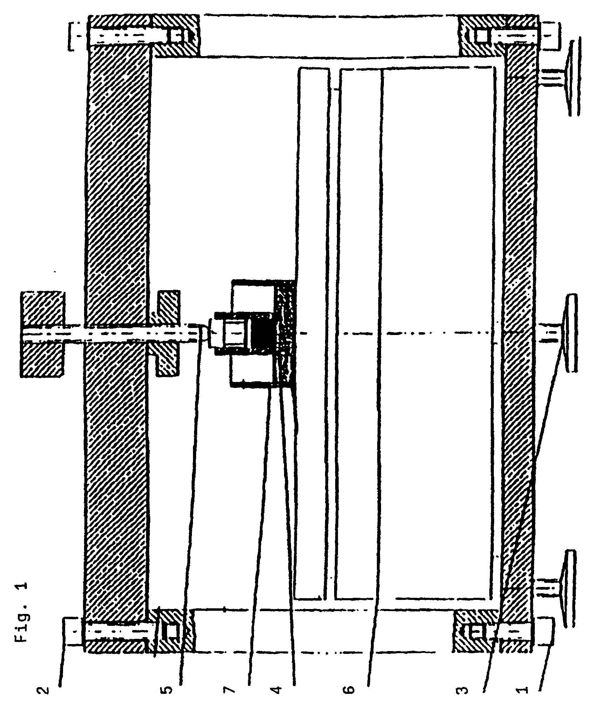

1. Bestimmung des Quelldrucks:
   Die Zerfallsgeschwindigkeit des gepreßten Formkörpers (Tablette) beim Einbringen in Wasser wird maßgeblich durch den Quelldruck bestimmt, den das Tablettensprengmittel beim Aufnehmen von Wasser erzeugt. Hierzu wurde analog zu der Veröffentlichung von List und Muazzam in Pharm. Ind. 41 (1979) S. 459-464 der Quelldruck bestimmt. Dazu wurde ein Testgemisch, bestehend aus 20 Gew.-% des zu prüfenden Tablettensprengmittels, 1 Gew.-% Aluminiumstearat, 79 Gew.-% Calciumdihydrogenphosphat*2H₂O kräftig durchgemischt und abgefüllt. Die Ansatzmenge betrug 10 g. Zur Herstellung von Prüftabletten wurden 0,50g des Gemisches in ein Preßwerkzeug eingefüllt und mit einer Preßkraft von 23 kN verpreßt. Bei dem Preßwerkzeug handelte es sich um eine handelsübliche Tablettenpresse, wie sie zur Herstellung von Preßlingen für die IR-Spektroskopie verwendet wird (Fabrikat Perkin Eimer mit Preßwerkzeug und Kraftmeßdose, Durchmesser des Preßwerkzeuges 13,5 mm). Zur Bestimmung des Quelldruckes wurde die Tablette anschließend in den Zylinder der Meßapparatur gemäß Fig. 1 gelegt und mit Hilfe des Stempels in der Apparatur auf einen Vordruck von 1 000 g fixiert. Nach dem Tarieren wurden etwa 5 g Wasser zugesetzt und die max. erreichte Massenanzeige auf der Waage abgelesen. Der Quelldruck errechnete sich aus der beim Quellen entstandenen Kraft, bezogen auf die Fläche des Stempels. Die Fläche des Stempels betrug 1,43 cm². Auf der Waage wurden 1800 g abgelesen, d.h. es war ein Quelldruck von 1,23 bar entstanden.
   Die Prüfapparatur für die Bestimmung des Quelldruckes ist in schematischer Weise in der **Fig. 1** dargestellt. Sie besteht im wesentlichen aus einer in ein Gehäuse mit abnehmbaren Seitenwänden und abnehmbarem Deckel befindlichen Waage 6 (Es handelte sich im konkreten Fall um eine Satorius LC 1200 S). Mit Hilfe der Stellfüße 3 läßt sich das Gehäuse auf der Aufstellfläche in die genaue horizontale Position justieren. Die Seitenwände (zum Teil durchsichtig) und der Deckel lassen sich mit den Zylinderschrauben 1 und 2 an der Grundplatte befestigen. Auf der Waagenplattform befindet sich das Rohr 7, das in seinem Zentrum den die Prüftablette enthaltenden Zylinder 4 enthält. Auf dieser Prüftablette ruht ein Stempel, dessen auf die Tablette ausgeübter Vordruck mit Hilfe der Gewindestange 5 eingestellt werden kann.
2. Die Viskosität wurde folgendermaßen bestimmt: Brookfield (RVT, Spindel 5, 20 Upm) bei 20 °C.
3. Vergelungs-Test
   Das Sprengmittel vergelt nicht, wenn es folgenden Test besteht: 1 Gramm des zu untersuchenden pulverförmigen Sprengmittels werden kreiskegelförmig in die Mitte einer Petrischale (Durchmesser 60 mm) gegeben. Anschließend wird mit einer Pipette destilliertes Wasser (5 ml) in die Petrischale um den Kegel herumgegeben und geprüft, ob das Wasser das Untersuchungsmaterial vollständig durchdringt. Bildet sich während des Versuches eine Sperrschicht, die eine vollständige Durchdringung der Probe mit Wasser verhindert, bleibt die Probe also innen teilweise trocken, so vergelt sie und entspricht nicht der erfindungsgemäßen Ausführung.

### II. Herstellung und Charakterisierung der Agglomerate

1. Rezepturen für Sprengmittel (in Gew.-%)

| | | |
|---|---|---|
| 1) | 7 % | Methylhydroxyethyl / propylcellulose (retardiert), |
| | 20 % | China Clay, |
| | 3 % | Cellulosefaser (gebleicht, 1000 µm Faserlänge), |
| | 69 % | Cellulosefaser (ungebleicht, 120 µm Faserlänge) und |
| | 1 % | nichtionische Netzmittel. |
| 2) | 7 % | Methylhydroxyethyl / propylcellulose (retardiert), |
| | 20 % | China Clay, |
| | 3 % | Cellulosefaser (gebleicht, 1000 µm Faserlänge), |
| | 69 % | Cellulosefaser (gebleicht, 120 µm Faserlänge), |
| | 1 % | nichtionisches Netzmittel. |
| 3) | 7 % | Methylhydroxyethyl / propylcellulose (retardiert), |
| | 3 % | Cellulosefaser (gebleicht, 1000 µm Faserlänge), |
| | 89 % | Cellulosefaser (ungebleicht, 120 µm Faserlänge) und |
| | 1 % | nichtionische Netzmittel. |
| 4) | 7 % | Methylhydroxyethyl / propylcellulose (retardiert), |
| | 3 % | Cellulosefaser (gebleicht 1000 µm Faserlänge), |
| | 89 % | Cellulosefaser (gebleicht, 120 µm Faserlänge) |
| | 1 % | nichtionische Netzmittel. |
| 5) | 7 % | Methylhydroxyethyl / propylcellulose (retardiert), |
| | 3 % | Cellulosefaser (gebleicht, 1000 µm Faserlänge), |
| | 89 % | Cellulosefaser (gebleicht, 30 µm Faserlänge) und |
| | 1 % | nichtionische Netzmittel. |
| 6) | 100 % | Methylhydroxyethyl / propylcellulose (retardiert). |
| 7) | 100 % | Cellulosefaser (120 µm Faserlänge). |

2. Rezepturen für die Tablettierung eines Kleisters (in Gew.-%)

| | | |
|---|---|---|
| 1) | 45 % | Methylcellulose, |
| | 10 % | Füllstoff (Al-Silikat), |
| | 35 % | Polyvinylacetatredispersionspulver (Homopolymer) |
| | 5 % | Cellulosefaserkompaktat (Sprengmittel) und |
| | 5 % | Karion (Polysaccharid). |
| 2) | 45 % | Methylcellulose, |
| | 10 % | Füllstoff (Al-Silikat), |
| | 32,5 % | Polyvinylacetatredispersionspulver (Homopolymer), |
| | 5 % | Cellulosefaserkompaktat (Sprengmittel), |
| | 5 % | Karion (Polysaccharid) und |
| | 5 % | Polyvinylalkohol. |
| 3) | 45 % | Methylcellulose, |
| | 10 % | Füllstoff (Al-Silikat), |
| | 35 % | Polyvinylacetatredispersionspulver (Homopolymer), |
| | 5 % | Cellulosefaserkompaktat (Sprengmittel) und |
| | 5 % | Polyvinylpyrrolidon. |
| 4) | 45 % | Methylcellulose, |
| | 10 % | Füllstoff (Al-Silikat), |
| | 35 % | Polyvinylacetatredispersionspulver (Homopolymer), |
| | 5 % | Cellulosefaserkompaktat (Sprengmittel) und |
| | 5 % | Polyvinylpyrrolidon. |
| 5) | 90 % | Carboxymethylstärke |
| | 10 % | Cellulosefaserkompaktat. |
| 6 bis 9) | | Rezepturen wie Rezeptur 1 mit CMS, HPS, CMC oder Mischungen davon anstelle von Methylcellulose. |

3. Herstellung der Sprengmittel-Kompaktate sowie deren Mischung mit Kleister-Rohstoffen
Zunächst werden die Rohstofffe gemäß obiger Rezepturen im Lödige-Mischer (Pflugscharmischer, 100 bis 200 Upm) ca. 20 Minuten homogen gemischt. Anschließend wird das Pulvergemisch einem Walzenkompaktor zugeführt, wobei das Material mit einem Preßdruck von 40 bis 90 bar kompaktiert wird. Das auf diese Weise kompaktierte Material wird nun den gewünschten Kleistermischungen (siehe oben) wiederum in einem Lödige-Mischer zugesetzt. Die Mischzeit beträgt ebenfalls ca. 20 Minuten. Die so hergestellten Produkte werden dann der Tablettierung zugeführt.
Bei dem Walzenkompaktor handelt es sich um eine Apparatur der Fa. Alexanderwerk AG, Remscheid. Sie umfaßt eine Rühreinrichtung mit einem schneckenförmigen Rührer, eine Schneckeneinspeisung mit 2 Förderschnecken, eine Walzenpresse mit einem Walzendurchmesser von 150 mm in einer Ballenlänge von 75 mm, zwei Feinregulatoren vom Typ RFG 100 N und eine elektrische Steuerung.
4. Herstellung und Charakterisierung der Klebstofftabletten
200 g eines Kleister-Pulvers auf der Basis obiger Rezepturen, z.B. von ca. 50 % Methylcellulose und ca. 50 % eines Polyvinylacetat-Redispersionspulvers wurden mit 2 bis 30 Gew.-% des erfindungsgemäßen Sprengmittels auf der Basis von Cellulose homogen vermischt und mit einer handelsüblichen Presse unter einem max. Preßdruck von 10 kN/cm² zu Formkörpern verpreßt. Die so erhaltenen Tabletten waren stabil und lösten sich bei vorschriftsmäßigem Vorgehen (entsprechend der Gebrauchsanleitung für Pulver) in Leitungswasser von Raumtemperatur in 3 min klumpenfrei auf.
5. Herstellung und Charakterisierung eines Kleisters aus der Klebstofftablette
Zur Überprüfung der Gebrauchstauglichkeit wurden Tabletten der in der nachfolgenden Tabelle angegebenen Zusammensetzung im Gewichtsverhältnis von 1 : 32 mit Wasser bei Raumtemperatur unter Rühren gemischt. Nach 2 Min. und 30 Min. wurde die Viskosität der Kleistermischung bestimmt.

**Tabelle**

| Lfd. Nr. | Carboxy-Methyl-Stärke Gew.-% | Sprengmittel | | Viskosität [Pas] | |
|---|---|---|---|---|---|
| | | bekannt ¹⁾ Gew.-% | erfindungsgemäß Gew.-% | nach 2 Min. | nach 30 Min. |
| 1 | 100 (Pulver) | - | - | 5 | 10 |
| 2 | 90 | - | 10 | 6 | 10 |
| 3 | 90 | 10 | - | 3,6 | 5,9 |

| | | | | | |
|---|---|---|---|---|---|
| 1) Gewichtsverhältnis von Na₂CO₃/NaHCO₃/Zitronensäure = 0,6 / 6,4 / 4,0 | | | | | |

Aus der Tablette, die das erfindungsgemäße Sprengmittel enthielt (Nr. 2), entstand also eine Kleisterlösung, die bereits 2 Min. nach dem Ansetzen der Kleisterlösung eine vergleichbare Viskosität hatte wie eine Kleisterlösung, die aus dem pulverförmigen Bindemittel (Nr. 1) hergestellt wurde. Eine Tablette (Nr. 3) gemäß Stand der Technik mit einem Sprengmittel, bestehend aus einer Säurekomponente und Bicarbonat ergab eine Kleisterlösung mit einer um etwa 40 % niedrigeren Viskosität, so daß diese wesentlich weniger ergiebig in ihrer Gebrauchstauglichkeit ist.

### 2. Herstellung und Charakterisierung eines Klebstoff-Kompaktats

90 % eines Kleister-Pulvers auf der Basis von ca. 50 % Methylcellulose und ca. 50 % eines Polyvinylacetat-Redispersionspulvers wurden mit 5 % Sprengmittel auf der Basis von Cellulose sowie 5 % Polyethylenglykol 4000 homogen vermischt und anschließend ohne Trocknung bei Raumtemperatur walzenkompaktiert. Die erhaltenen Platten wurden gebrochen. Der Feinanteil < 400 µm wurde abgesiebt. Das Aggregat ließ sich problemlos in Wasser klumpenfrei einrühren. Die Endviskosität des Kleisters aus dem Aggregat lag mit 9000 mPas nach 30 min im Rahmen der Spezifikation des Originals. Das Schüttgewicht entsprach mit 500 g/l dem der Originalware. Das Kompaktat löst sich auch nach einer Lagerzeit von mehr als 6 Monaten problemlos auf.

## Patentansprüche

1. Agglomerate, seien es Formteile oder Aggregate, aus Stoffen zur Herstellung eines wäßrigen Bindemittelsystems, die
a) 30 bis 100Gew.-% wasserlösliche bzw. wasserdispergierbare, im trockenen Zustand bei Raumtemperatur nicht klebrige anorganische oder organische, natürliche oder halbsynthetische Polymere sowie
b) 0 bis 70 Gew.-% vollsynthetische Polymere enthalten, jeweils bezogen auf die Summe von Sprengmittel und Stoffen zur Herstellung eines wäßrigen Bindemittelsystems,
**dadurch gekennzeichnet, daß** die Agglomerate mindestens ein hydrophiles Sprengmittel mit einer faserigen inneren oder äußeren Struktur enthalten, das in Wasser unlöslich ist und einen Quelldruck erzeugt.

2. Agglomerate nach Anspruch 1, **gekennzeichnet durch** den Gehalt an
- 99,5 bis 50, insbesondere 97 bis 70 und vor allem bis 95 bis 85 Gew.-% an Stoffen zur Herstellung eines wäßrigen Bindemittelsystems und
- 0,5 bis 50, vorzugsweise 3 bis 30 und vor allem 5 bis 15 Gew.-% an Sprengmittel,
bezogen auf die Summe von Sprengmittel und Stoffen zur Herstellung eines wäßrigen Bindemittelsystems.

3. Agglomerate nach Anspruch 1 oder 2, **gekennzeichnet durch** einen Quelldruck des Sprengmittels von mehr als 10⁵, vorzugsweise mehr als 1,4·10⁵ Nm⁻² (mehr als 1 bar bzw. mehr als 1,4 bar).

4. Agglomerate nach Anspruch 1, **gekennzeichnet durch** eine Wasserunlöslichkeit des Sprengmittels von weniger als 1 g/100 ml Wasser bei 20 °C, vorzugsweise weniger als 0,01 g/100 ml Wasser bei 20 °C, gemessen als Sättigungsgrenze.

5. Agglomerate nach Anspruch 1, **dadurch gekennzeichnet, daß** die faserigen Sprengmittel Kurzschnittfasern und mikrokristalline Polymere, insbesondere mikrokristalline Cellulose sind.

6. Agglomerate nach Anspruch 1, **dadurch gekennzeichnet, daß** das Sprengmittel einen Feinanteil mit einem Durchmesser < 0,2 mm von weniger als 10, vorzugsweise weniger als 5 Gew.-% aufweist, bezogen auf das Sprengmittel insgesamt.

7. Agglomerate nach Anspruch 1, **dadurch gekennzeichnet, daß** pulverförmiges Sprengmittel mit Wasser nicht vergelt.

8. Aggtomerate nach mindestens einem der Ansprüche 1 bis 7, **dadurch gekennzeichnet, daß** das Sprengmittel ein natürliches oder synthetisches Polysaccharid bzw. Polysaccharid-Derivat ist, insbesondere Cellulose und seine Derivate.

9. Agglomerate nach mindestens einem der vorangegangenen Ansprüche,
**dadurch gekennzeichnet, daß** sie weniger als 10 Gew.-%, vorzugsweise weniger als 1 Gew.-% an unter Anwendungs- und Lager-Bedingungen gasbildenden Salzen enthält.

10. Agglomerate nach mindestens einem der vorangegangenen Ansprüche,
**dadurch gekennzeichnet, daß** die Stoffe zur Herstellung eines wäßrigen Bindemittelsystems zu
a) 50 bis 99 Gew.-% wasserlösliche bzw. wasserdispergierbare, im trockenen Zustand bei Raumtemperatur nicht klebrige anorganische oder organische, natürliche oder halbsynthetische Polymere sowie
0 bis 50 Gew.-% vollsynthetische Polymere enthalten, jeweils bezogen auf die Summe von Sprengmittel und Stoffen zur Herstellung eines wäßrigen Bindemittelsystems.

11. Agglomerate nach Anspruch 10, **gekennzeichnet durch** Wasserglas, Stärke, Stärkederivate und/oder Cellulosederivate, insbesondere Celluloseether als Basispolymere.

12. Agglomerate nach Anspruch 10, **gekennzeichnet durch** Vinylpolymere und/oder Polyacrylate, insbesondere redispergierbare Polyvinylacetate als Klebkraftverstärker.

13. Agglomerate nach mindestens einem der vorangegangenen Ansprüche. **gekennzeichnet durch** bis zu 30, vorzugsweise 1 bis 10 Gew.-% an Füllstoffen aus der Gruppe der Carbonate, Silikate, Kieselerde, Sulfate, Aluminiumhydroxid, Glas-Fasern und Glas-Kugeln, bezogen auf die Summe der Stoffe zur Herstellung eines wäßrigen Bindemittelsystems und des Sprengmittels.

14. Verfahren zur Herstellung der Agglomerate nach mindestens einem der vorangegangenen Ansprüche durch Einwirkung von Druck, Temperatur und/oder Lösemittel auf die pulverförmige oder agglomerierte Mischungen der Stoffe zur Herstellung eines wäßrigen Bindemittelsystems sowie des Sprengmittels.

15. Verfahren nach Anspruch 14, **gekennzeichnet durch** einen Preßdruck von höchstens 10, vorzugsweise höchstens 5 k N/cm².

16. Verwendung der Agglomerate nach mindestens einem der vorangegangenen Ansprüche zur Herstellung eines Kleisters für Wandbeläge.

## Claims

1. Agglomerates in the form of shaped bodies or aggregates of substances for the preparation of an aqueous binder system which contain
a) 30 to 100% by weight of water-soluble or water-dispersible inorganic or organic, natural or semisynthetic polymers which are non-tacky at room temperature in the dry state and
b) 0 to 70% by weight of fully synthetic polymers,
based on the sum of disintegrator and substances for the preparation of an aqueous binder system,
**characterized in that** the agglomerates contain at least one hydrophilic disintegrator with a fibrous internal or external structure which is insoluble in water and which generates a swelling pressure.

2. Agglomerates as claimed in claim 1, **characterized by** a content of
- 99.5 to 50, more particularly 97 to 70 and above all 95 to 85% by weight of substances for the preparation of an aqueous binder system and
- 0.5 to 50, preferably 3 to 30 and above all 5 to 15% by weight of disintegrator,
based on the sum of disintegrator and substances for the preparation of an aqueous binder system.

3. Agglomerates as claimed in claim 1 or 2, **characterized by** a swelling pressure of the disintegrator of more than 10⁵ and preferably more than 1.4·10⁵ Nm⁻² (more than 1 bar or more than 1.4 bar).

4. Agglomerates as claimed in claim 1, **characterized by** an insolubility of the disintegrator in water of less than 1 g/100 ml water at 20°C and preferably less than 0.01 g/100 ml water at 20°C, measured as the saturation limit.

5. Agglomerates as claimed in claim 1, **characterized in that** the fibrous disintegrators are short-cut fibers and microcrystalline polymers, more particularly microcrystalline cellulose.

6. Agglomerates as claimed in claim 1, **characterized in that** the disintegrator contains less than 10% by weight and preferably less than 5% by weight, based on the disintegrator as a whole, of fine particles smaller than 0.2 mm in diameter.

7. Agglomerates as claimed in claim 1, **characterized in that** powder-form disintegrator does not gel in water.

8. Agglomerates as claimed in at least one of claims 1 to 7, **characterized in that** the disintegrator is a natural or synthetic polysaccharide or polysaccharide derivative, more particularly cellulose or a cellulose derivative.

9. Agglomerates as claimed in at least one of the preceding claims,
**characterized in that** they contain less than 10% by weight and preferably less than 1% by weight of salts which generate gas under in-use and storage conditions.

10. Agglomerates as claimed in at least one of the preceding claims, **characterized in that** the substances for preparing an aqueous binder system contain
a) 50 to 99% by weight of water-soluble or water-dispersible inorganic or organic, natural or semisynthetic polymers which are non-tacky at room temperature in the dry state and
0 to 50% by weight of fully synthetic polymers,
based on the sum of disintegrator and substances for the preparation of an aqueous binder system.

11. Agglomerates as claimed in claim 10, **characterized by** waterglass, starch, starch derivatives and/or cellulose derivatives, more particularly cellulose ethers, as basic polymers.

12. Agglomerates as claimed in claim 10, **characterized by** vinyl polymers and/or polyacrylates, more particularly redispersible polyvinyl acetates, as adhesiveness promoters.

13. Agglomerates as claimed in at least one of the preceding claims, **characterized by** up to 30% by weight and preferably 1 to 10% by weight of fillers from the group of carbonates, silicates, silica, sulfates, aluminium hydroxide, glass fibers and glass beads, based on the sum of the substances for preparing an aqueous binder system and the disintegrator.

14. A process for the production of the agglomerates claimed in at least one of the preceding claims by the action of pressure, temperature and/or solvents on the powder-form or agglomerated mixtures of the substances for preparing an aqueous binder system and the disintegrator.

15. A process as claimed in claim 14, **characterized by** an applied pressure of at most 10 and preferably of at most 5 kN/cm².

16. The use of the agglomerates claimed in at least one of the preceding claims for the production of a paste for wall coverings.

## Revendications

1. Agglomérés, qu'il s'agisse de pièces moulées ou d'agrégats, constitués de matériaux pour la production d'un système de liants aqueux qui contiennent
a) de 30 à 100 % en poids de polymères naturels ou semi-synthétiques, inorganiques ou organiques, solubles dans l'eau ou selon les cas dispensables dans l'eau, non collants à l'état sec à la température ambiante ainsi que
b) de 0 à 70 % en poids de polymères entièrement synthétiques, toujours par rapport à la somme du désagrégeant et des matériaux, pour la production d'un système de liants aqueux,
**caractérisé en ce que**
les agglomérés contiennent au moins un désagrégeant hydrophile avec une structure interne ou externe fibreuse qui est insoluble dans l'eau et qui produit une pression de gonflement.

2. Agglomérés selon la revendication 1,
**caractérisés en ce qu'**
ils contiennent
- 99,5 à 50, en particulier de 97 à 70 et surtout jusqu'à 95 à 85 % en poids de matériaux pour la production d'un système de liant aqueux et
- de 0,5 à 50, de préférence de 3 à 30 et surtout de 5 à 15 % en poids de désagrégeant,
par rapport à la somme des désagrégeants et des matériaux pour la production d'un système de liants aqueux.

3. Agglomérés selon la revendication 1 ou 2,
**caractérisés par**
une pression du gonflement du désagrégeant supérieure à 10⁵, de préférence supérieure à 1,4 x 10⁵ Nm⁻² (supérieure à 1 bar ou selon les cas supérieure à 1,4 bar).

4. Agglomérés selon la revendication 1,
**caractérisés par**
une insolubilité dans l'eau du désagrégeant inférieure à 1 g/100 ml d'eau à 20°C, de préférence inférieure à 0,01 g/100 ml d'eau à 20°C, mesurée sous la forme de la limite de saturation.

5. Agglomérés selon la revendication 1,
**caractérisés en ce que**
les désagrégeants fibreux sont des fibres coupées courts et des polymères microcristallins, en particulier de la cellulose microcristalline.

6. Agglomérés selon la revendication 1.
**caractérisés en ce que**
le désagrégeant présente une fraction fine ayant un diamètre inférieur à 0,2 mm en une quantité inférieure à 10. en particulier inférieure à 5 % en poids, par rapport au désagrégeant dans l'ensemble.

7. Agglomérés selon la revendication 5,
**caractérisés en ce que**
le désagrégeant pulvérulent ne se gélifie pas avec l'eau.

8. Agglomérés selon au moins une des revendications 1 à 7,
**caractérisés en ce que**
le désagrégeant est un polysaccharide ou selon les cas dérivé de polysaccharide naturel ou synthétique, en particulier la cellulose et ses dérivés.

9. Agglomérés selon au moins une des revendications précédentes,
**caractérisés en ce qu'**
ils contiennent moins de 10 % en poids, de préférence moins de 1 % en poids, de sels formant des gaz dans les conditions d'application et de conservation.

10. Agglomérés selon au moins une des revendications précédentes,
**caractérisés en ce que**
les matériaux pour la production d'un système de liant aqueux contiennent
a) 50 à 99 % en poids d'un polymère naturel ou semi-synthétique, inorganique ou organique, soluble dans l'eau ou selon les cas dispersables à l'eau, non collant à l'état sec à la température ambiante ainsi que
0 à 50 % en poids de polymères entièrement synthétiques,
par rapport à la somme du désagrégeant et des matériaux pour la production d'un système de liant aqueux.

11. Agglomérés selon la revendication 10,
**caractérisés par**
un orthosilicate, de l'amidon, des dérivés de l'amidon et/ou des dérivés de cellulose, en particulier des éthers de cellulose comme polymères de base.

12. Agglomérés selon la revendication 10,
**caractérisés par**
des polymères vinyliques et/ou des polyacrylates, en particulier des acétates de polyvinyle redispersables comme agents de renforcement de la force d'adhésion.

13. Agglomérés selon au moins une des revendications précédentes,
**caractérisé par**
jusqu'à 30, de préférence de 1 à 10 % en poids de charges du groupe des carbonates, silicates, silices, sulfates, hydroxydes d'aluminium, fibres de verre et billes de verre, par rapport à la somme des matériaux pour la production d'un système de liant aqueux et du désagrégeant.

14. Procédé de production d'agglomérés selon au moins l'une des revendications précédentes, par l'action de la pression, de la température et/ou de solvants sur des mélanges pulvérulents ou agglomérés des matériaux pour la production d'un système de fiant aqueux ainsi que du solvant.

15. Procédé selon la revendication 14,
**caractérisé par**
une pression de compression d'au plus 10, de préférence d'au plus 5 kN/cm².

16. Utilisation des agglomérés selon au moins l'une des revendications précédentes, pour la production d'un empois pour revêtement de paroi.
